(19) **Europäisches Patentamt**
**European Patent Office**
**Office européen des brevets**

(11) **EP 4 521 199 A2**

(12) **EUROPEAN PATENT APPLICATION**

(43) Date of publication:
**12.03.2025 Bulletin 2025/11**

(21) Application number: **24199558.8**

(22) Date of filing: **10.09.2024**

(51) International Patent Classification (IPC):
*G06F 1/3203* (2019.01)    *G06F 1/3206* (2019.01)
*G06F 1/3209* (2019.01)    *G06F 1/3228* (2019.01)
*G06F 1/324* (2019.01)    *G06F 1/3234* (2019.01)
*G06F 1/3287* (2019.01)    *G06F 9/48* (2006.01)
*G06F 9/50* (2006.01)    *G06N 20/00* (2019.01)
*H04L 12/10* (2006.01)    *H04L 12/40* (2006.01)
*H04L 41/00* (2022.01)    *H04L 43/00* (2022.01)

(52) Cooperative Patent Classification (CPC):
G06F 1/3203; G06F 1/3206; G06F 1/3209;
G06F 1/3228; G06F 1/324; G06F 1/3243;
G06F 1/3287; G06F 9/4893; G06F 9/5083;
G06F 9/5094; G06N 20/00; H04L 12/00;
H04L 12/10; H04L 12/40039; H04L 12/40045;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2023 IN 202341060929
28.06.2024 US 202418759383**

(71) Applicant: **Juniper Networks, Inc.
Sunnyvale, CA 94089 (US)**

(72) Inventors:
• **KOMMULA, Raja**
  **Sunnyvale, 94089 (US)**
• **SUNKADA, Ganesh Byagoti Matad**
  **Sunnyvale, 94089 (US)**
• **SRIDHAR, Thayumanavan**
  **Sunnyvale, 94089 (US)**
• **YAVATKAR, Raj**
  **Sunnyvale, 94089 (US)**

(74) Representative: **D Young & Co LLP
3 Noble Street
London EC2V 7BQ (GB)**

(54) **DEPENDENCY-AWARE SMART GREEN WORKLOAD SCALER**

(57) An example system may include one or more memories and one or more processors. The one or more processors are configured to determine that a first workload depends on one or more other workloads. The one or more processors are configured to determine a measure of first carbon emission associated with the first workload and determine a predicted measure of second carbon emission associated with the one or more other workloads. The one or more processors are configured to determine a combined emission, the combined emission including the measure of the first carbon emission and the predicted measure of the second carbon emission. The one or more processors are configured to determine a replica count of the first workload based on the combined emission and an emission threshold and schedule spawning of replicas of the first workload or destruction of replicas of the first workload to implement the replica count.

FIG. 6

(52) Cooperative Patent Classification (CPC): (Cont.)
**H04L 41/00; H04L 43/00; H04W 52/00;**
G06F 2209/5019

## Description

This application claims the benefit of US Patent Application No. 18/759,383, filed 28 June 2024, which claims the benefit of India patent application 202341060929, filed 11 September 2023, which is incorporated by reference herein in its entirety.

## TECHNICAL FIELD

This disclosure relates to computer networks and, more specifically, to computer networks having at least a portion of energy requirements met by renewable energy sources.

## BACKGROUND

In a typical cloud data center environment, there is a large collection of interconnected servers that provide computing and/or storage capacity to run various applications. For example, a data center may comprise a facility that hosts applications and services for subscribers, e.g., customers of the data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

As data centers become larger, energy usage by the data centers increases. Some large data centers require a significant amount of power (e.g., around 100 megawatts), which is enough to power a large number of homes (e.g., around 80,000). Data centers may also run application workloads that are compute and data intensive, such as crypto mining and machine learning applications, that consume a significant amount of energy. As energy use has risen, customers of data centers and data center providers themselves have become more concerned about meeting energy requirements through the use of renewable (e.g., green) energy sources, as opposed to non-renewable, carbon emitting, fossil fuel-based (e.g., non-green) energy sources. As such, some service level agreements (SLAs) associated with data center services include green energy goals or requirements.

## SUMMARY

In general, techniques are described for workload scaling to address concerns and/or SLAs regarding the use of green and/or non-green energy sources. Currently, carbon emission aware workload scalers are available for horizontal scaling (e.g., scaling of a number of replicas of a workload). In such scalers, the scale factor for spawning replicas of a particular workload is calculated based on the carbon emission metrics of that particular workload. However, spawning replicas of the particular workload may increase a number of other workloads upon which the particular workload is dependent. Such other workloads may cause carbon emissions. Thus, scaling one workload may cause more carbon emission than is associated directly with that particular workload. The techniques of this disclosure provide for more accurate carbon emission SLA implementations when determining how to scale a particular workload by not only considering the carbon emission directly attributed to the particular workload, but also considering indirect carbon emission caused by scaling up other workloads upon which the particular workload depends.

In one example, this disclosure describes a computing system including one or more memories; and one or more processors communicatively coupled to the one or more memories, the one or more processors being configured to: determine that a first workload depends on one or more other workloads; determine a measure of first carbon emission associated with the first workload; determine a predicted measure of second carbon emission associated with the one or more other workloads; determine a combined emission, the combined emission including the measure of the first carbon emission and the predicted measure of the second carbon emission; determine a replica count of the first workload based on the combined emission and an emission threshold; and schedule spawning of replicas of the first workload or destruction of replicas of the first workload to implement the replica count.

In another example, this disclosure describes a method including determining, by one or more processors, that a first workload depends on one or more other workloads; determining, by the one or more processors, a measure of first carbon emission associated with the first workload; determining, by the one or more processors, a predicted measure of second carbon emission associated with the one or more other workloads; determining, by the one or more processors, a combined emission, the combined emission including the measure of the first carbon emission and the predicted measure of the second carbon emission; determining, by the one or more processors, a replica count of the first workload based on the combined emission and an emission threshold; and scheduling, by the one or more processors, spawning of replicas of the first workload or destruction of replicas of the first workload to implement the replica count.

In another example, this disclosure describes non-transitory computer-readable media storing instructions which, when executed, cause one or more processors to determine that a first workload depends on one or more other workloads; determine a measure of first carbon emission associated with the first workload; determine a predicted measure of second carbon emission associated with the one or more other workloads; determine a combined emission, the combined emission including the measure of the first carbon emission and the predicted measure of the second carbon emission; determine a replica count of the first workload based on the combined emission and an emission threshold; and schedule spawning of replicas of the first workload or destruction of replicas of the first workload to implement the replica count.

The details of one or more examples of this disclosure are set forth in the accompanying drawings and the description below. Other features, objects, and advantages will be apparent from the description and drawings, and from the claims.

## BRIEF DESCRIPTION OF DRAWINGS

FIG. 1 is a block diagram illustrating an example network system having a data center in which examples of the techniques described herein may be implemented.
FIG. 2 is a block diagram illustrating an example computing device according to techniques described herein.
FIG. 3 is a conceptual diagram illustrating example scaling of workloads according to one or more aspects of this disclosure.
FIG. 4 is a block diagram illustrating an example cluster controller including a dependency aware green workload scaler according to one or more aspects of this disclosure.
FIG. 5 is a flow diagram illustrating example techniques for a dependency-aware smart green workload scaler according to one or more aspects of this disclosure.
FIG. 6 is a flow diagram illustrating other example techniques for a dependency-aware smart green workload scaler according to one or more aspects of this disclosure.

Like reference characters denote like elements throughout the description and figures.

## DETAILED DESCRIPTION

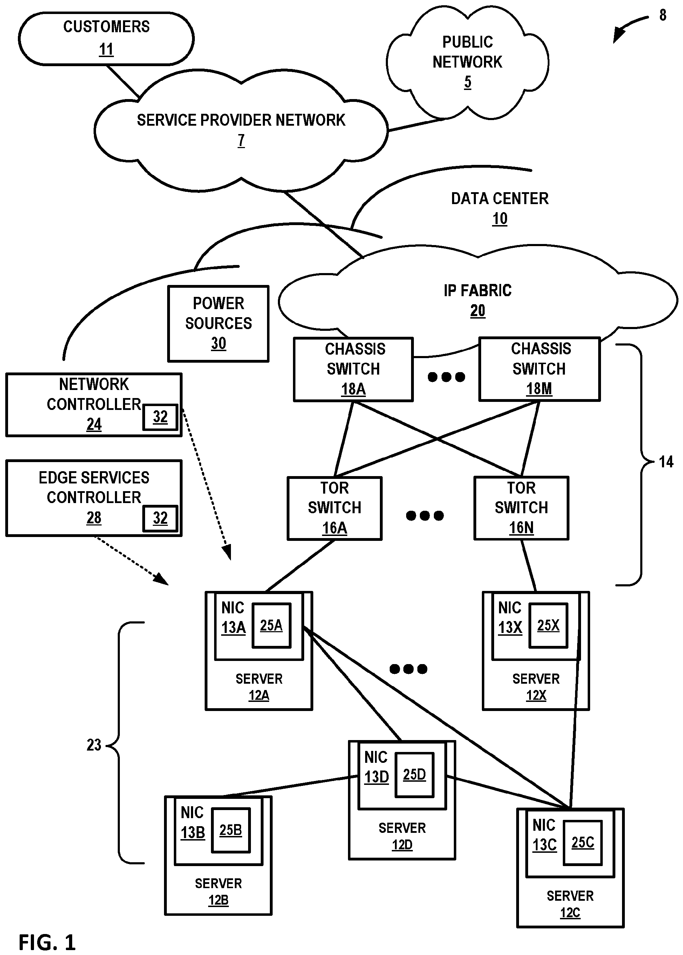

FIG. 1 is a block diagram illustrating an example system 8 having computing infrastructure in which examples of the dependency-aware smart green workload scaler techniques described herein may be implemented. In general, data center 10 provides an operating environment for applications and services for one or more customer sites 11 (illustrated as "customers 11") having one or more customer networks coupled to the data center by service provider network 7. Data center 10 may, for example, host infrastructure equipment, such as networking and storage systems, redundant power supplies, and environmental controls. Service provider network 7 is coupled to public network 5, which may represent one or more networks administered by other providers, and may thus form part of a large-scale public network infrastructure, e.g., the Internet. Public network 5 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 5 are illustrated and described primarily as edge networks of service provider network 7, in some examples, one or more of customer sites 11 and public network 5 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 5. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for an NFV architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

In some examples, servers 12 each may include at least one network interface card (NIC) of NICs 13A-13X (collectively, "NICs 13"), which each include at least one port with which to exchange packets send and receive packets over a communication link. For example, server 12A includes NIC 13A. NICs 13 provide connectivity between the server and the switch fabric. In some examples, NIC 13 includes an additional processing unit in the NIC itself to offload at least some of the processing from the host CPU (e.g., the CPU of the server that includes the NIC) to the NIC, such as for performing policing and other advanced functionality, known as the "datapath."

In some examples, each of NICs 13 provides one or more virtual hardware components for virtualized input/output (I/O). A virtual hardware component for I/O may be a virtualization of a physical NIC 13 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interface cards as "virtual functions" for use by respective endpoints executing on the server 12. In this way, the virtual network endpoints may share the same PCIe physical hardware resources and the virtual functions are examples of virtual hardware components. As another example, one or more servers 12 may implement Virtio, a para-virtualization framework available, e.g., for the Linux Operating System, that provides emulated NIC functionality as a type of virtual hardware component. As another example, one or more servers 12 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, including the illustrated example of FIG. 1, one or more of NICs 13 may include multiple ports. NICs 13 may be connected to one another via ports of NICs 13 and communications links to form a NIC fabric 23 having a NIC fabric topology. NIC fabric 23 is the collection of NICs 13 connected to at least one other NIC 13.

In some examples, NICs 13 each include a processing unit to offload aspects of the datapath. The processing unit in the NIC may be, e.g., a multi-core ARM processor with hardware acceleration provided by a Data Processing Unit (DPU), Field Programmable Gate Array (FPGA), and/or an ASIC. NICs 13 may alternatively be referred to as SmartNICs or GeniusNICs.

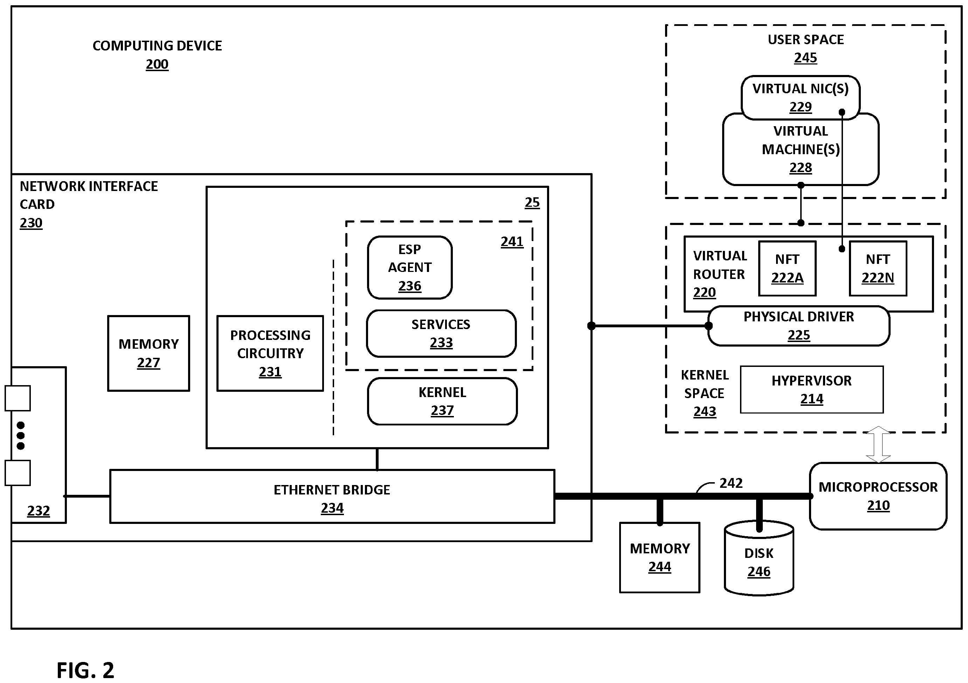

Edge services controller 28 may manage the operations of the edge services platform within NICs 13 in part by orchestrating services (e.g., services 233 as shown in FIG. 2) to be performed by processing units 25; API driven deployment of services 233 on NICs 13; NIC 13 addition, deletion and replacement within the edge services platform; monitoring of services 233 and other resources on NICs 13; and management of connectivity between various services 233 running on the NICs 13.

Edge services controller 28 may communicate information describing services available on NICs 13, a topology of NIC fabric 13, or other information about the edge services platform to an orchestration system (not shown) or network controller 24. Example orchestration systems include OpenStack, vCenter by VMWARE, or System Center by MICROSOFT. Example network controllers 24 include a controller for Contrail by JUNIPER NETWORKS or Tungsten Fabric. Additional information regarding a network controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent Application No. 14/226,509, filed March 26, 2014, and entitled "Tunneled Packet Aggregation for Virtual Networks," each of which is incorporated by reference as if fully set forth herein.

Any of servers 12 or NICs 13 may execute workloads of a service or application. The execution of the workloads may consume energy provided by power sources 30. In some examples, service level agreements (SLAs) may place requirements on a service or application such that the workloads of the service or application do not exceed a prescribed level of "greenness" or cause the emission of a prescribed level of carbon dioxide ($CO_2$). As such network controller 24 and/or edge services controller 28 may monitor and determine energy consumption and/or energy efficiency associated with workloads of a service or application.

In some examples, network controller 24 or edge services controller 28 determines the energy efficiency and/or usage of data center 10 for workloads running on servers 12 and/or NICs 13. In some examples, network controller 24, edge services controller 28, and/or other device(s) of FIG. 1 may determine the type of energy usage, such as an amount of green energy usage and/or an amount of non-green energy usage associated with data center 10, a given service, a given workload, a given node, a given cluster of nodes, or the like.

As one example, network controller 24 and/or edge services controller 28 may include an energy efficiency module 32 configured to monitor and/or determine the energy efficiency of the data center, clusters (including clusters spanning multiple data centers), servers, NICs, other compute nodes, workloads, or the like.

In the example of FIG. 1, data center 10 may obtain energy from one or more power sources 30 for data center 10. While shown inside data center 10, it should be understood that power generating equipment for power sources 30 may be located outside of data center 10. For example, a windmill or powerplant may be located outside of data center 10, but power from the windmill or powerplant may be available in data center 10 via power sources 30. Power sources 30 may include renewable (green) energy sources, non-renewable (non-green) energy sources, or a combination of renewable and non-renewable energy sources.

Energy efficiency module 32 may obtain telemetry data, including energy usage data of compute nodes, such as any of servers 12 and/or NICs 13. Current energy usage data may include, for example, an amount of power currently used by the compute node, the amount of carbon emission ($CO_2$ emission) associated with the power currently used by the compute node, or the like. In some examples, energy efficiency module 32 may obtain telemetry data including energy usage data and/or emission data on a workload basis. For example, energy efficiency module 32 may obtain telemetry data indicating that a particular workload uses a particular number of kilowatt hours or is attributed with a particular number of grams of $CO_2$ emissions per hour.

In some examples, energy efficiency module 32 may determine power currently used by a workload or carbon emission associated with the power currently used by the workload. For example, energy efficiency module 32 may determine power currently used by a workload or carbon emission associated with the power currently used by the workload as a pro rata share of power or carbon emission associated with all of the workloads currently executing on a compute node providing the energy usage data. In some examples, energy efficiency module 32 may determine power currently used by a workload or carbon emission associated with the power currently used by the workload by comparing power used or emissions when the workload is not running to power used or emissions when the workload is running.

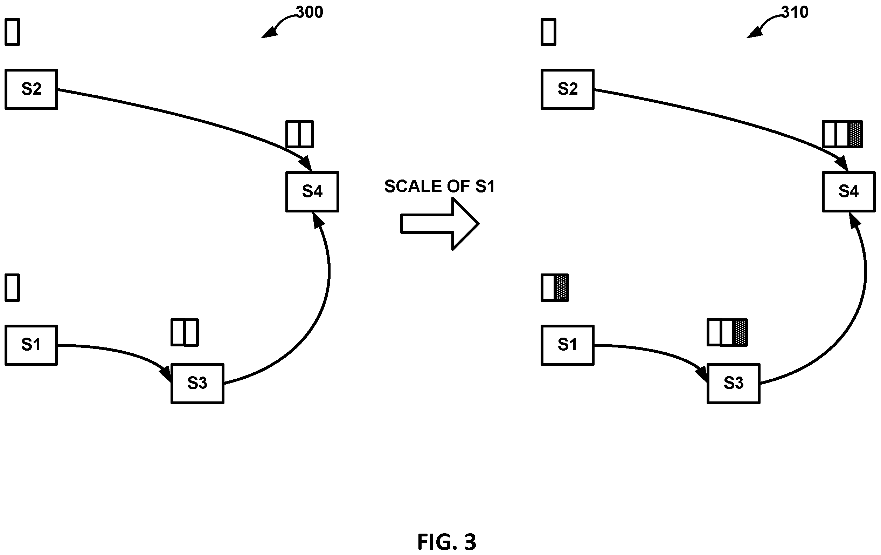

Any of the workloads executing on servers 12 and/or NICs 13 may depend on one or more other workloads. For example, a workload of server 12A may depend on a workload on NIC 13D. In some examples, a workload may be said to depend on another workload if the workload makes function calls to the other workload. Each of the workloads may consume energy provided by power sources 30. In some examples, one workload may depend on another workload which may depend on yet another workload, forming a sort of chain of dependencies. Dependencies are discussed in further detail herein with respect to FIG. 3.

For example, network controller 24 may determine that a first workload executing on server 12A depends on one or more other workloads, which may be executing on NIC 13D. Network controller 24 may determine a measure of first carbon emission associated with the first workload executing on server 12A. This measure of first carbon emission may be a measure of carbon emission directly attributable to the first workload.

Network controller 24 may also determine a predicted measure of second carbon emission associated with the one or more other workloads. For example, the predicted measure of second carbon emission may be a predicted measure of indirect carbon emission caused by spawning replica(s) of the first workload on server 12A. Indirect carbon emission may include carbon emission caused by additional replicas of the one or more other workloads that are to be spawned to meet the increase demands of additional replica(s) of the first workload.

Network controller 24 may determine a combined emission, the combined emission including the measure of the first carbon emission and the predicted measure of the second carbon emission. Network controller 24 may determine a replica count of the first workload based on the combined emission and an emission threshold and schedule spawning of replicas of the first workload or destruction of replicas of the first workload to implement the replica count.

FIG. 2 is a block diagram illustrating an example computing device according to techniques described herein. Computing device 200 of FIG. 2 may represent network controller 24, edge services controller 28, or may represent an example instance of any of servers 12 of FIG. 1. Computing device 200 includes in this example, a bus 242 coupling hardware components of a computing device 200 hardware environment. Bus 242 couples SR-IOV-capable network interface card (NIC) 230, storage disk 246, and microprocessor 210. A frontside bus may in some cases couple microprocessor 210 and memory device 244. In some examples, bus 242 may couple memory device 244, microprocessor 210, and NIC 230. Bus 242 may represent a Peripheral Component Interface (PCI) express (PCIe) bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer-readable storage media that includes volatile and/or non-volatile, removable and/or non-removable media implemented in any method or technology for storage of information such as processor-readable instructions, data structures, program modules, or other data. Computer-readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Main memory 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Main memory 244 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between the NIC 230 and other devices coupled to bus 242 may read/write from/to the memory 227.

Memory 244, NIC 230, storage disk 246, and microprocessor 210 provide an operating environment for a software stack that executes a hypervisor 214 and one or more virtual machines 228 managed by hypervisor 214.

In general, a virtual machine provides a virtualized/guest operating system for executing applications in an isolated virtual environment. Because a virtual machine is virtualized from physical hardware of the host server, executing applications are isolated from both the hardware of the host and other virtual machines.

An alternative to virtual machines is the virtualized container, such as those provided by the open-source DOCKER Container application. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, containers may require less processing power, storage, and network resources than virtual machines. As used herein, containers may also be referred to as virtualization engines, virtual private servers, silos, or jails. In some instances, the techniques described herein with respect to containers and virtual machines or other virtualization components.

While virtual network endpoints in FIG. 2 are illustrated and described with respect to virtual machines, other operating environments, such as containers (e.g., a DOCKER container) may implement virtual network endpoints. An operating system kernel (not shown in FIG. 2) may execute in kernel space 243 and may include, for example, a Linux, Berkeley Software Distribution (BSD), another Unix-variant kernel, or a Windows server operating system kernel, available from MICROSOFT.

Computing device 200 executes a hypervisor 214 to manage virtual machines 228 of user space 245. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM).

Virtual machines 228 may host one or more applications, such as virtual network function instances. In some examples, a virtual machine 228 may host one or more VNF instances, where each of the VNF instances is configured to apply a network function to packets.

Hypervisor 214 includes a physical driver 225 to use a physical function provided by NIC 230. In some cases, NIC 230 may also implement SR-IOV to enable sharing the physical network function (I/O) among virtual machines. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to each of virtual machines as a dedicated NIC. Virtual functions may represent lightweight PCIe functions that share physical resources with the physical function and with other virtual functions. NIC 230 may have thousands of available virtual functions according to the SR-IOV standard, but for I/O-intensive applications the number of configured virtual functions is typically much smaller.

Virtual machines 228 include respective virtual NICs 229 presented directly into the virtual machine 228 guest operating system, thereby offering direct communication between NIC 230 and the virtual machine 228 via bus 242, using the virtual function assigned for the virtual machine. This may reduce hypervisor 214 overhead involved with software-based, VIRTIO and/or vSwitch implementations in which hypervisor 214 memory address space of memory 244 stores packet data and packet data copying from the NIC 230 to the hypervisor 214 memory address space and from the hypervisor 214 memory address space to the virtual machines 228 memory address space consumes cycles of microprocessor 210.

NIC 230 may further include a hardware-based Ethernet bridge or embedded switch 234. Ethernet bridge/embedded switch 234 may perform layer 2 forwarding between virtual functions and physical functions of NIC 230. Ethernet bridge/embedded switch 234 thus in some cases provides hardware acceleration, via bus 242, of inter-virtual machine packet forwarding and of packet forwarding between hypervisor 214, which accesses the physical function via physical driver 225, and any of the virtual machines. The ethernet bridge/embedded switch 234 may be physically separate from processing unit 25.

Computing device 200 may be coupled to a physical network switch fabric that includes an overlay network that extends switch fabric from physical switches to software or "virtual" routers of physical servers coupled to the switch fabric, including virtual router 220. Virtual routers may be processes or threads, or a component thereof, executed by the physical servers, e.g., servers 12 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of virtual router may be performed as one of services 233.

In the example computing device 200 of FIG. 2, virtual router 220 executes within hypervisor 214 that uses a physical function for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. A virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machines 228 and virtual network controller, such as network controller 24. For example, a virtual machine may request to send a message using its virtual address via the VN agent, and VN agent may in turn send the message and request that a response to the message be received for the virtual address of the virtual machine that originated the first message. In some cases, a virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), VxLAN, Multiprotocol Label Switching (MPLS) over GRE, MPLS over User Datagram Protocol (UDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for *N* virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

An edge services platform leverages processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one or more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs). DPUs may be examples of processing unit 25.

In the example NIC 230, processing unit 25 executes an operating system kernel 237 and a user space 241 for services. Kernel may be a Linux kernel, a Unix or BSD kernel, a real-time OS kernel, or other kernel for managing hardware resources of processing unit 25 and managing user space 241.

Services 233 may include network, security, storage, data processing, co-processing, machine learning or other services, such as energy efficiency services, in accordance with techniques described in this disclosure. Processing unit 25 may execute services 233 and edge service platform (ESP) agent 236 as processes and/or within virtual execution elements such as containers or virtual machines. As described elsewhere herein, services 233 may augment the processing power of the host processors (e.g., microprocessor 210) by, e.g., enabling the computing device 200 to offload packet processing, security, or other operations that would otherwise be executed by the host processors.

Processing unit 25 executes edge service platform (ESP) agent 236 to exchange data and control data with an edge services controller for the edge service platform. While shown in user space 241, ESP agent 236 may be a kernel module 237 in some instances.

As an example, ESP agent 236 may collect and send, to the ESP controller, telemetry data generated by services 233, the telemetry data describing traffic in the network, computing device 200 or network resource availability, resource availability of resources of processing unit 25 (such as memory or core utilization), and/or resource energy usage. As another example, ESP agent 236 may receive, from the ESP controller, service code to execute any of services 233, service configuration to configure any of services 233, packets or other data for injection into the network.

In some examples, edge services controller 28 manages the operations of processing unit 25 by, e.g., orchestrating and configuring services 233 that are executed by processing unit 25; deploying services 233; NIC 230 addition, deletion and replacement within the edge services platform; monitoring of services 233 and other resources on NIC 230; and management of connectivity between various services 233 running on NIC 230. Example resources on NIC 230 include memory 227 and processing circuitry 231. In some examples, edge services controller 28 may invoke one or more actions to improve energy usage of data center 10 via managing the operations of processing unit 25. In some examples, edge services controller 28 may set a target green quotient for processing unit 25 that causes processing unit 25 to select or adjust a particular routing or tunnel protocol, particular algorithm, MTU size, interface, and/or any of services 233.

In some examples, virtual machine(s) 228 may execute a number of different workloads, for example, workloads of a plurality of services. Energy efficiency module 32 may obtain telemetry data, including energy usage data, emissions data, etc., of computing device 200 to determine resource usage resulting from workloads executed by computing device 200 and to scale workloads based on the telemetry data from computing device 200.

In a cluster of compute nodes, a scaler may scale up workloads by spawning additional replicas of the workload. Generally, a scaler may scale a workload based on the resource usage metrics, or some load indicative metrics. For example, in Kubernetes, an auto scaler can be configured for a workload to scale up when the workload's CPU resource usage crosses a threshold limit of 80%. Another example may be a web server workload may be scaled up when an incoming http request count crosses a target threshold of 10K requests.

Currently, carbon emission aware workload scalers are available. In such scalers, the scale factor for scaling a particular workload is calculated based on the carbon emission metrics of the particular workload. However, these scalers do not consider the indirect carbon emission caused due to the scale up of the particular workload. For example, workloads of a cluster may be inter-dependent, such that a scale up/down of one workload may cause a scale up/down of one or more additional, inter-dependent workloads.

For example, when a regular workload is scaled up, this may cause the scale up of cloud native network functions. When a web server is scaled up due to an increase in incoming requests count, this scale up may cause the scale up of database, storage, and/or network function workloads as well. For example, a web server workload may depend on the storage and network function workloads. Carbon emissions caused by the scaling up of these additional workloads is not currently considered when calculating the scale factor for the web server.

With existing green aware scalers, when a particular workload is causing lower carbon emissions, the scalers may allow the particular workload to scale up to a maximum configured value. However, this scale up may cause a scale up of other workloads upon which the particular workload is dependent, an increase in network bandwidth, and/or an eventual scale up of network functions. This resultant scale up of other workloads may also cause carbon emissions to increase due to the scale up of the particular workload. As such, carbon emission SLAs of the particular workload may not be accurate without actually considering indirect emissions caused by scale up of a particular workload.

Such carbon emission may be referred to herein as indirect carbon emissions of the particular workload. In some examples, a device such as network controller 24 may determine the carbon emission of a workload as:

Carbon Emission of Workload = Direct $CO_2$ Emission(workload) + Indirect $CO_2$ Emission(workload)

According to the techniques of this disclosure, a carbon aware scaler may also consider the estimated indirect $CO_2$ emission to calculate a scale factor for a workload. The techniques of this disclosure thereby help to achieve green SLA requirements, or label an application as greener, by considering end-to-end emission in scaling workloads of the application and any workloads upon which the workload is dependent.

In accordance with the techniques of this disclosure, a system may use, in some examples, machine learning techniques to estimate the indirect $CO_2$ emission caused by the scale up of a particular workload. A machine learning based estimation function may use the scale telemetry data of the dependent workloads and network functions to derive the approximate indirect carbon emission caused by the particular workload. When determining a scale factor of the particular workload, network controller 24 may use a scale factor derivation function that may consider both the direct carbon emission and estimated indirect carbon emission of the particular workload to derive the scale factor. For example, the scale factor may be determined as a linear function of both the direct carbon emissions and the estimated indirect carbon emissions:

$$\text{Scale Factor(workload)} = \text{Linear\_Function (Direct } CO_2 \text{ emission, Indirect } CO_2 \text{ emission)}$$

For example, network controller 24 may employ a derivation function that uses linear programming function(s) to derive a maximum possible scale factor based on both the direct and indirect carbon emissions. In some examples, the scale factor determination may be time bound using predictive machine learning algorithms.

FIG. 3 is a conceptual diagram illustrating example scaling of workloads according to one or more aspects of this disclosure. Services are shown at a first time (services 300) and at a second time after a scaling of service 1 (S 1) (services 310). In services 300, S 1 and service 2 (S2) each have one workload replica which are represented by the rectangles above S1 and S2. Service 3 (S3) and service 4 (S4) each have two workload replicas. S1 depends on S3 and S4, S3 depends on S4, and S2 depends on S4. For example, S1 may make function calls to S3, and both S2 and S3 may make function calls to S4. At the second time, as indicated by services 310, S1 scales up from one workload replica to two workload replicas (as indicated by the one clear rectangle and the one filled rectangle above S1). This scale in S1 causes a scale in S3 from 2 workload replicas to 3 workload replicas. This scale in S3 causes a scale in S4 from 2 workload replicas to 3 workload replicas. Because a scale of S1 may cause a scale of S3 and S4, there may be an indirect increase in carbon emissions caused by the scaling of S1 due to the scaling of S3 and S4. Workloads upon which another workload may be dependent may include infrastructure workloads, such as network functions, storage, backup, etc.

Because indirect scaling may increase carbon emissions, it may be desirable to, when determining a scaling factor for a workload, to consider the emission of the workload plus emission of other workloads upon which workload is depending. For example, network controller 24 may determine a replica count of a particular workload using emission information for the particular workload and any workloads upon which the particular workload depends. For example, network controller 24 may determine a direct emission of a particular workload (S1) to be a measure of $CO_2$ emission attributed to, or caused by, the particular workload alone (S1). Network controller 24 may determine an indirect emission of the particular workload (S1) to be a measure or estimate of $CO_2$ emissions caused by all the workloads upon which the particular workload ultimately depends (S3 and S4). Network controller 24 may determine a combined emission of the particular workload as a sum of the direct emission of the particular workload and the indirect emission of the particular workload.

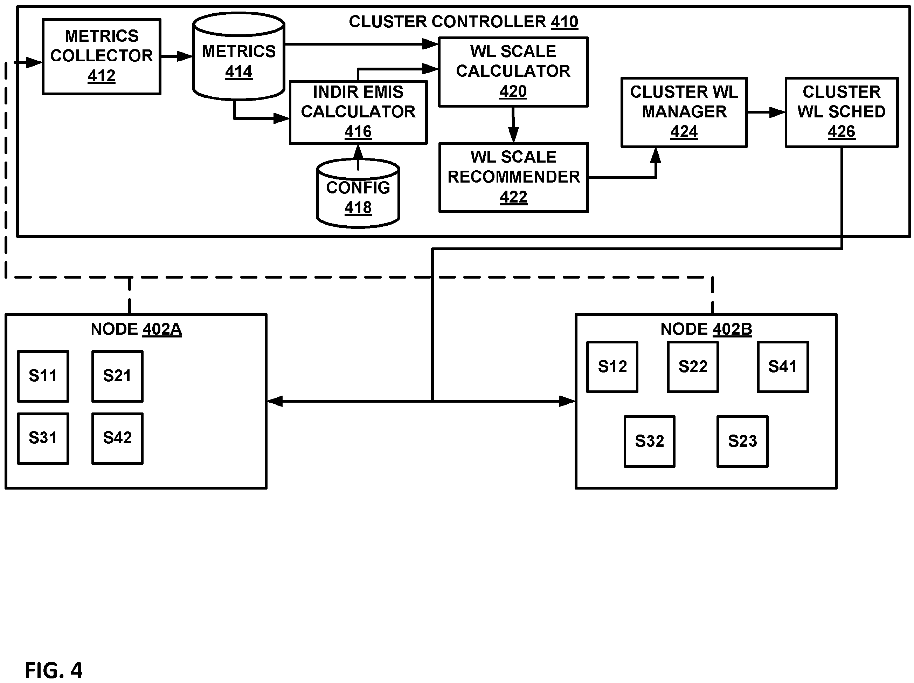

FIG. 4 is a block diagram illustrating an example cluster controller including a dependency aware green workload scaler according to one or more aspects of this disclosure. In the example of FIG. 4, a cluster controller 410 is shown for a cluster having two nodes, namely node 402A and node 402B. Cluster controller 410 may be implemented by network controller 24, edge services controller 28, and/or any other device capable of performing the techniques of this disclosure. While the example of FIG. 4 is shown with two nodes, the number of nodes may be fewer or greater than two. Cluster controller 410 may periodically determine how to scale workloads of node 402A and/or 402B.

As depicted in FIG. 4, node 402A executes a number of workloads as depicted by service 1 workload 1 (S11), service 2 workload 1 (S21), service 3 workload 1 (S31), and service 4 workload 2 (S42). Node 402B executes service 1 workload 2 (S12), service 2 workload 2 (S22), service 2 workload 3 (S23), service 3 workload 2 (S32), and service 4 workload 1 (S41). Workloads of a service may sometimes be referred to as replicas. The workloads shown as being implemented on nodes 402A and 402B are shown as examples and different numbers or types of workloads may be implemented than those shown.

Cluster controller 410 may include an auto scaler. For example, one or more of the depicted elements of cluster controller 410 may implement an auto scaler. When an auto scaler is configured for a workload, a scale recommender of cluster controller, such as network controller 24, may periodically calculate a recommended replica count (RC). For example, an auto scaler may recommend scaling by a factor of 2 or 3 when scaling up, such that for a workload having 2 replicas, the scaler may recommend a total of 4 or 6 replicas.

In some examples, cluster controller 410 (e.g., indirect emission calculator 416 and/or workload scale calculator 420) may determine a plurality of replica counts (RCs) as recommendations for scaling. For example, cluster controller 410 determine each RC based on a corresponding metric of the following metrics: a) Resource or Service/application metrics (e.g., service load metrics) (RC1); b) the direct emission of the workload (RC2); and c) the combined $CO_2$ emission of the workload (e.g., when the workload depends on one or more other workloads) (RC3). In some examples, the direct emission of the workload may not exceed a user definable threshold. In which case, the RC for b) may be capped.

In some examples, cluster controller 410 may recommend an RC that is not above an RC derived based on $CO_2$ emission. For example, an RC based on emission metric(s) may act as a stop gate or limiter for workload scale recommender 422. Current auto scalers do not consider the combined $CO_2$ emission of the workload and ignore any indirect $CO_2$ emissions scaling a workload may cause.

For example, metrics collector 412 may collect resource and/or applications metrics and $CO_2$ emission metrics from nodes 402A and 402B. Metrics collector 412 may store such metrics in one or more metrics databases, such as metrics database 414. For example, nodes 402A and 402B may report metrics including resource usage/non-usage, active workloads, etc. Nodes 402A and 402B may also report $CO_2$ emission metrics per workload. $CO_2$ emission metrics may be determined by nodes 402A and 402B through any technique described herein or through any other technique.

Indirect emission calculator 416 may read resource and applications metrics and $CO_2$ emission metrics from metrics database 414. Indirect emission calculator 416 may also read configuration information from configuration database 418 which may be indicative of which workloads have dependencies on which other workloads. Indirect emission calculator 416 may determine or estimate an indirect emission associated with the workload. In some examples, indirect emission calculator 416 may determine a combined $CO_2$ emission of the workload.

In some examples, indirect emission calculator may include a machine learning model which may learn patterns in metrics database 414. In some examples, the machine learning model may determine which workloads are dependent on which other workloads. For example, over time (e.g., a week or more), metrics collector 412 may collect enough metrics that a machine learning model could use to determine patterns regarding how the scale up of one application impacts the scale up of application(s) upon which the one application depends. In some examples, the machine learning model may determine a scale factor for each workload upon which a given workload depends. For example, referring to FIG. 3, the machine learning model may determine that when a new replica for S1 is spawned, a new replica for S3 and S4 will be spawned to meet the increased demand on S3 and S4 created by the new replica for S1.

For example, indirect emission calculator 416 may use scale metrics data to learn a relative scale factor (RSF) for the workload(s) upon which a particular workload is depending. Indirect emission calculator 416. Indirect emission calculator 416 may use a general correlation machine learning model using replica count (e.g., scale statistics) of workloads to determine the RSFs. The RSF may be indicative of how a replica count of a workload upon which the particular workload depends varies with respect to the replica count of the particular workload. RSF may be a number that is a correlation coefficient between the replica count of a particular workload and any workloads upon which the particular workload depends. For example, workload W1 has RSF=2 for W2 and RSF=1 for W3, which means that when W1 is scales by 1 replica, W2 will scale up by 2 replicas and W3 will scale up by 1 replica.

Indirect emission calculator 416 may use emission metrics stored in metrics database 414. For example, indirect emission calculator 416 may determine or obtain (e.g., read from metrics database 414) a workload emission rate (WER).

The WER may be a measure of emissions caused by or attributed to a workload per a unit of time. For example, if a WER of a workload is 150 $gCO_2$/hour, and the workload runs for an hour, the workload directly causes or is attributed as having caused approximately 150 grams of $CO_2$ emission.

Indirect emission calculator 416 may determine the indirect scale (IS) of a workload as a sum of the expected replicas of the workloads upon which the subjected workload is dependent if the dependent workload is scaled up. For example, IS = sum[ (DR * WRSF1) + (DR * WRSF2) + ... + (DR * WRSFn)].

Indirect emission calculator 416 may determine the indirect emission (IE) of the workload as IE = sum[ (DR * WRSF1 * WER1) + (DR * WRSF2 * WER2) + ... + (DR * WRSFn * WERn)].

In some examples, indirect emission calculator 416 may send the indirect emission associated with the workload to workload scale calculator 420 and workload scale calculator 420 may calculate the combined $CO_2$ emission of the workload. In such examples, workload scale calculator 420 may include a machine learning model similar to the one discussed above with respect to indirect emission calculator 416.

Workload scale calculator 420 may read resource and application metrics from database 414 and calculate a plurality of workload scale options. For example, workload scale calculator may determine a plurality of workload scale options or RCs, each based on one of a) resource or service/application metrics (e.g., service load metrics) (RC1); b) the direct emission of the workload (RC2); or c) the combined $CO_2$ emission of the workload (e.g., when the workload depends on one or more other workloads) (RC3).

For example, at every periodic iteration, workload scale calculator 420 may calculate the RC to be running based on the current value of the configured metrics for the auto scaler for the particular workload. For example, workload scale calculator 420 may calculate a scale calculation based on resource or application metrics. For example, workload scale calculator 420 may determine replica count 1 (RC1) as:

$$RC1 = ceil[currentReplicas * ( currentMetricValue / desiredMetricValue )].$$

Workload scale calculator 420 may calculate a replica count based on the current workload emission and any emission threshold that may be configured. For example, workload scale calculator 420 may determine replica count 2 (RC2) as:

$$RC2 = ceil[currentReplicas * (Carbon\ Emission\ Threshold / Current\ Workload\ Emission)].$$

Workload scale calculator 420 may calculate a replica count based on the combined emission workload and any combined emission threshold that may be configured. For example, workload scale calculator 420 may determine replica count 3 (RC3) as:

RC3 = ceil[currentReplicas * (Combined Carbon Emission Threshold / Combined Current Workload Emission)].

Workload scale recommender 422 may select one of the plurality of workload scale options (e.g., RC1, RC2, or RC3) to implement for a given workload. For example, workload scale recommender 422 may recommend a lower of an emission-based option or the resource or service/application based option. For example, when a workload has no dependency on any other workloads, workload scale recommender 422 may recommend the lower of RC1 or RC2. When a workload has a dependency on at least one other workload, workload scale recommender 422 may recommend the lower of RC1 or RC3.

For example, referring briefly back to FIG. 3, S2 in services 300 is currently running with replica count of 1. At some iteration, workload scale calculator 420 may calculate the RC calculated based on resource or application metrics(incoming_http_request_total) for workload S2 as RC1=3. For example, the current emission of S2 may be 1000 grams (g) $CO_2$ and an emission threshold may be 1800g $CO_2$, which in some examples, may be specified by an SLA. Workload scale calculator 420 may determine RC2 = ceil [current replica count * 1800/1000] = ceil[1 * 1800 / 100] = 2. S2 depends on S4, and may have Relative Scale Factor(RSF) = 1. WL scale calculator 420 (or indirect emissions calculator 416) may determine the combined emission of S2 = Current Emission of S2 + Estimated emission of S4 = 1000g CO2 + 1200g CO2 = 2200g CO2. The 1200g CO2 associated with S4 may be based on current emission metrics for S4 and the RSF of S4. As such, the RC3 = ceil[current replica * (Emission Threshold/Combined Emission)] = ceil[1 * 1800/2200] = 1. While described here for explanatory purposes, it should be noted that if a workload does depend on one or more other workloads, workload scale calculator 420 may refrain from calculating RC2, as RC2 cannot be larger than RC3.

Therefore, in this example, RC1= 3, RC2=2, RC3 = 1. Since RC1 > RC3, workload scale recommender 422 may recommend RC3. If S2 had no dependency on S4, workload scale recommender 422 would have recommended RC2, and cluster workload would have controlled cluster workload scheduler to spawn another replica of S2. In effect, cluster controller 410 does not allow S2 to scale up by considering the indirect effect scaling up S2 would have on CO2 emission. Thus, cluster controller 410 ensures that S2 remains as green of a workload as configured, for example, as specified in an SLA.

Cluster workload manager 424 may control cluster workload scheduler 426 to implement the recommended RC option. Cluster workload scheduler 426 may schedule the creation or destruction of workload replicas on nodes 402A and/or 402B to follow the recommended RC option. For example, if the recommendation were for service 2 to only have 2 replicas, cluster workload scheduler 426 may schedule the destruction of workload S23 on node 402B. If the recommendation were for service 4 to have 3 replicas, cluster workload scheduler 426 may schedule the creation of a third workload replica (S43 - not shown) on either node 402A or node 402B.

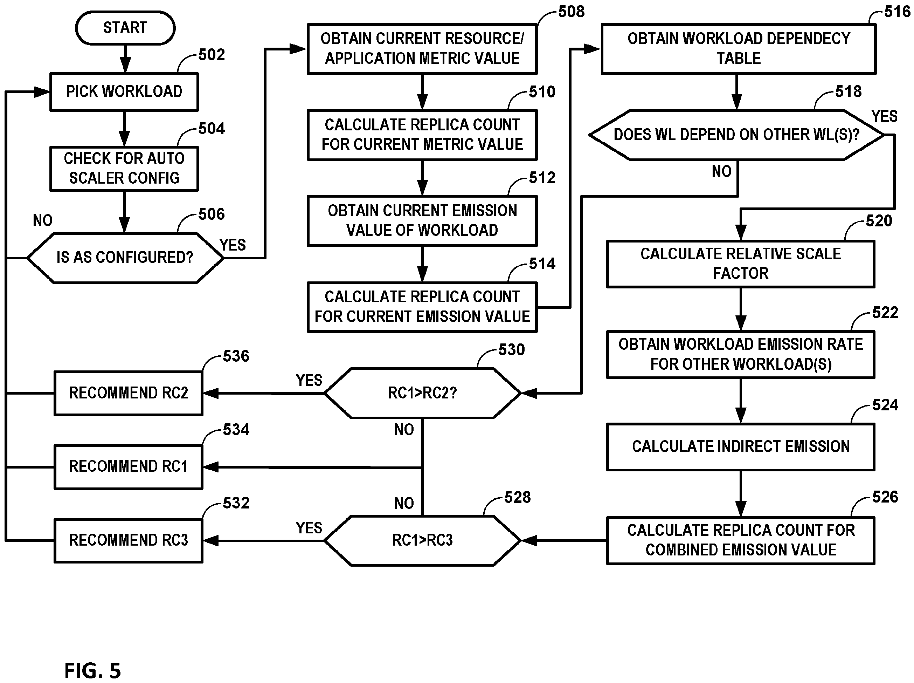

FIG. 5 is a flow diagram illustrating example techniques for a dependency-aware smart green workload scaler according to one or more aspects of this disclosure. While the example of FIG. 5 is described with respect to network controller 24, the techniques of FIG. 5 may be performed by network controller 24, edge services controller 28, and/or any other device capable of performing such techniques.

Network controller 24 may pick a workload (502). For example, network controller 24 may select workload S1. Network controller 24 may check to see if an auto scaler is configured for the selected workload (504). Network controller 24 may determine whether an auto scaler is configured for the selected workload (506). For example, network controller 24 may read configuration data related to workload S1. If auto scaler is not configured for the workload (the "NO" path from box 506), network controller 24 may pick (e.g., select) a next workload, such as workload S2.

If auto scaler is configured for the selected workload (the "YES" path from box 506), network controller 24 may obtain the current resource/application metric value associated with that selected workload (508). For example, network controller 24 may read the current resource/application metric value associated with that workload from metrics database 414. Network controller 24 may calculate an RC for the current metric value (510). For example, network controller 24 may calculate an option for a workload RC based on the current resource/application metric value associated with that selected workload (e.g., RC1).

Network controller 24 may obtain a current emission value of the workload (512). For example, network controller 24 may read the current emission value associated with the selected workload from metrics database 414. Network controller 24 may calculate a replica count for the current emission value (514). For example, network controller 24 may calculate an option for a workload replica count based on the current emission value associated with that selected workload (e.g., RC2).

Network controller 24 may obtain a workload dependency table (516). The workload dependency table may be a table that indicates any dependencies among workloads and may be input by an administrator or determined by network controller 24, for example, through analysis of workloads over time. Network controller 24 may read the workload dependency table from memory, such as configuration database 418.

Network controller 24 may determine whether the selected workload depends on any other workloads (518). If the selected workload does not depend on any other workloads (the "NO" path from box 518), network controller 24 may determine whether the RC1 is greater than RC2 (530). If RC1 is greater than RC2 (the "YES" path from box 530), network controller 24 may recommend RC2 (536) as the replica scale option to be used. In such a case, network controller 24 may implement RC2 for the selected workload. If RC1 is not greater than RC2 (the "NO" path from box 530), network controller 24 may recommend RC1 as the replica scale option to be used (534). In such a case, network controller 24 may implement RC1 for the selected workload.

Referring back to box 518, if the selected workload does depend on any other workloads (the "YES" path from box 518), network controller 24 may calculate an RSF (520). For example, network controller 24 may determine an RSF that is indicative of a how replica count of a workload upon which the selected workload depends varies with respect to the replica count of the selected workload. Network controller 24 may obtain workload emission rate for the other workload(s) upon which the selected workload depends (522). For example, network controller 24 may read the workload emissions rate(s) from metrics database 414.

Network controller 24 may calculate the indirect emission for the selected workload (524). For example, network controller 24 may determine an estimate of the emission that would result from scaling up the workloads upon which the selected workload depends in order to meet the scaling up of the selected workload. Network controller 24 may calculate an RC for the combined emission value (526). For example, network controller 24 may determine a replica scale option based on the combined emission value (e.g., RC3).

Network controller 24 may determine whether RC1 is greater than RC3 (528). If RC1 is greater than RC3 (the "YES" path from box 528), network controller may recommend RC3 (532) as the replica scale option to be used. In such a case, network controller 24 may implement RC3 for the selected workload. If RC1 is not greater than RC3 (the "NO" path from box 528), network controller 24 may recommend RC1 (534) as the replica scale option to be used. In such a case, network controller 24 may implement RC1 for the selected workload.

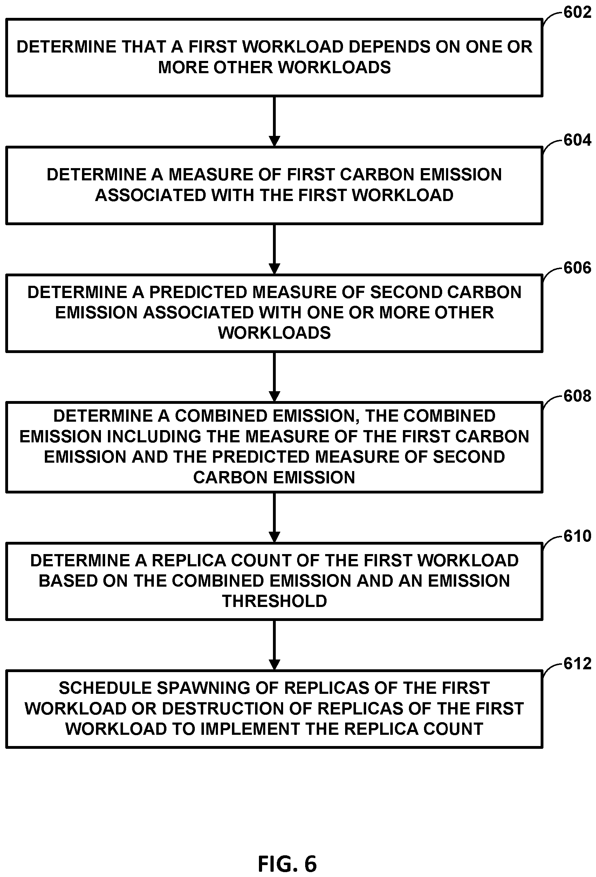

FIG. 6 is a flow diagram illustrating other example techniques for a dependency-aware smart green workload scaler according to one or more aspects of this disclosure. While the example of FIG. 6 is described with respect to network controller 24, the techniques of FIG. 6 may be performed by network controller 24, edge services controller 28, and/or any other device capable of performing such techniques.

Network controller 24 may determine that a first workload depends on one or more other workloads (602). For example, network controller 24 may read a workload dependency table from configuration database 418 or execute a machine learning model to determine workload dependencies. Network controller 24 may determine a measure of first carbon emission associated with the first workload (604). For example, network controller 24 may determine a current emission from emission metrics stored in metrics database 414 associated with the first workload.

Network controller 24 may determine a predicted measure of second carbon emission associated with the one or more other workloads (606). For example, network controller 24 may determine a relative scale factor associated with the one or more other workloads and use the relative scale factor and current emission metrics stored in metrics database 414 to determine a predicted measure of the second carbon emission associated with the one or more other workloads. Network controller 24 may determine a combined emission, the combined emission including the measure of the first carbon emission and the predicted measure of the second carbon emission (608). For example, network controller 24 may add the first carbon emission and the predicted measure of the second carbon emission to determine the combined emission.

Network controller 24 may determine a replica count of the first workload based on the combined emission and an emission threshold (610). For example, network controller 24 may determine RC3. Network controller 24 may schedule spawning of replicas of the first workload or destruction of replicas of the first workload to implement the replica count (612). For example, network controller 24 may control the creation or tear down of replicas such that a total number of replicas of the first workload equals the replica count.

In some examples, the first carbon emission is a direct carbon emission attributable to the first workload, the first carbon emission not including any emission attributable to the one or more other workloads. In some examples, the second carbon emission is an indirect carbon emission attributable to supporting scale up of the one or more other workloads due to a scale up of the first workload. In some examples, network controller 24 may determine a scale factor as a linear function of the direct carbon emission and the indirect carbon emission.

In some examples, as part of determining the measure of second carbon emission associated with the one or more other workloads, network controller 24 may determine a corresponding relative scale factor for each of the one or more other workloads, the relative scale factor being indicative of a relative scaling of one or the one or more other workloads caused by a scaling of the first workload. In some examples, network controller may determine the corresponding relative scale factor by executing a machine learning model, wherein the machine learning model is trained on historical workload metrics. In some examples, network controller 24 may determine that the first workload depends on the one or more other workloads by executing a machine learning model, wherein the machine learning model is trained on historical workload metrics.

In some examples, network controller 24 may output an indication that the first workload is certified against emission criteria. For example, the indication may indicate that the first workload meets or exceeds an SLA emission requirement.

In some examples, the replica count is a first replica count. In some examples, network controller 24 may determine a second replica count of the first workload based on at least one of resource metrics, service metrics, or application metrics. In some examples, network controller 24 may determine that the second replica count is greater than the first replica count. In some examples, network controller 24 may determine to implement the first replica count based on the second replica count being greater than first replica count.

In some examples, network controller 24 may determine that a second workload does not depend on the one or more other workloads. In some examples, network controller 24 may determine a measure of carbon emission associated with the second workload. In some examples, network controller 24 may determine a first replica count of the second workload based on at least one of resource metrics, service metrics, or application metrics. In some examples, network controller 24 may determine a second replica count of the second workload based on the measure of the carbon emission associated with the second workload. In some examples, network controller 24 may determine that the first replica count is greater than the second replica count. In some examples, network controller 24 may determine to implement the second replica count based on the first replica count being greater than second replica count. In some examples, network controller 24 may schedule spawning of replicas of the second workload or destruction of replicas of the second workload to implement the second replica count.

In some examples, the emission threshold is specified by a service level agreement.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. A computer-readable medium may take the form of a computer readable data storage medium and/or a computer readable transmission medium.

For example, a computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

In some examples, a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective there has been described an example system including one or more memories and one or more processors. The one or more processors are configured to determine that a first workload depends on one or more other workloads. The one or more processors are configured to determine a measure of first carbon emission associated with the first workload and determine a predicted measure of second carbon emission associated with the one or more other workloads. The one or more processors are configured to determine a combined emission, the combined emission including the measure of the first carbon emission and the predicted measure of the second carbon emission. The one or more processors are configured to determine a replica count of the first workload based on the combined emission and an emission threshold and schedule spawning of replicas of the first workload or destruction of replicas of the first workload to implement the replica count.

Further examples are set out in the following numbered clauses.

Clause 1. A computing system comprising: one or more memories; one or more processors communicatively coupled to the one or more memories, the one or more processors being configured to: determine that a first workload depends on one or more other workloads; determine a measure of first carbon emission associated with the first workload; determine a predicted measure of second carbon emission associated with the one or more other workloads; determine a combined emission, the combined emission including the measure of the first carbon emission and the predicted measure of the second carbon emission; determine a replica count of the first workload based on the combined emission and an emission threshold; and schedule spawning of replicas of the first workload or destruction of replicas of the first workload to implement the replica count.

Clause 2. The computing system of clause 1, wherein the first carbon emission is a direct carbon emission attributable to the first workload, the first carbon emission not including any emission attributable to the one or more other workloads.

Clause 3. The computing system of clause 2, wherein the second carbon emission is an indirect carbon emission attributable to supporting scale up of the one or more other workloads due to a scale up of the first workload.

Clause 4. The computing system of clause 3, wherein the one or more processors are further configured to determine a scale factor as a linear function of the direct carbon emission and the indirect carbon emission.

Clause 5. The computing system of any of clauses 1-4, wherein to determine the measure of second carbon emission associated with the one or more other workloads, the one or more processors are configured to determine a corresponding relative scale factor for each of the one or more other workloads, the relative scale factor being indicative of a relative scaling of one of the one or more other workloads caused by a scaling of the first workload.

Clause 6. The computing system of clause 5, wherein the one or more processors are configured to determine the corresponding relative scale factor by executing a machine learning model, wherein the machine learning model is trained on historical workload metrics.

Clause 7. The computing system of any of clauses 1-6, wherein the one or more processors are configured to determine that the first workload depends on the one or more other workloads by executing a machine learning model, wherein the machine learning model is trained on historical workload metrics.

Clause 8. The computing system of any of clauses 1-7, wherein the one or more processors are further configured to output an indication that the first workload is certified against emission criteria.

Clause 9. The computing system of any of clauses 1-8, wherein the replica count is a first replica count and wherein one or more processors are further configured to: determine a second replica count of the first workload based on at least one of resource metrics, service metrics, or application metrics; determine that the second replica count is greater than the first replica count; and determine to implement the first replica count based on the second replica count being greater than first replica count.

Clause 10. The computing system of any of clauses 1-9, wherein the one or more processors are further configured to: determine that a second workload does not depend on the one or more other workloads; determine a measure of carbon emission associated with the second workload; determine a first replica count of the second workload based on at least one of resource metrics, service metrics, or application metrics; determine a second replica count of the second workload based on the measure of the carbon emission associated with the second workload; determine that the first replica count is greater than the second replica count; and determine to implement the second replica count based on the first replica count being greater than second replica count; and schedule spawning of replicas of the second workload or destruction of replicas of the second workload to implement the second replica count.

Clause 11. The computing system of any of clauses 1-10, wherein the emission threshold is specified by a service level agreement.

Clause 12. A method comprising: determining, by one or more processors, that a first workload depends on one or more other workloads; determining, by the one or more processors, a measure of first carbon emission associated with the first workload; determining, by the one or more processors, a predicted measure of second carbon emission associated with the one or more other workloads; determining, by the one or more processors, a combined emission, the combined emission including the measure of the first carbon emission and the predicted measure of the second carbon emission; determining, by the one or more processors, a replica count of the first workload based on the combined emission and an emission threshold; and scheduling, by the one or more processors, spawning of replicas of the first workload or destruction of replicas of the first workload to implement the replica count.

Clause 13. The method of clause 12, wherein the first carbon emission is a direct carbon emission attributable to the first workload, the first carbon emission not including any emission attributable to the one or more other workloads.

Clause 14. The method of clause 13, wherein the second carbon emission is an indirect carbon emission attributable to supporting scale up of the one or more other workloads due to a scale up of the first workload.

Clause 15. The method of clause 14, further comprising determining, by the one or more processors, a scale factor as a linear function of the direct carbon emission and the indirect carbon emission.

Clause 16. The method of any of clauses 12-15, wherein determining the measure of second carbon emission associated with the one or more other workloads comprises determining a corresponding relative scale factor for each of the one or more other workloads, the relative scale factor being indicative of a relative scaling of one of the one or more other workloads caused by a scaling of the first workload.

Clause 17. The method of clause 16, wherein determining the corresponding relative scale factor comprises executing a machine learning model, wherein the machine learning model is trained on historical workload metrics.

Clause 18. The method of any of clauses 12-17, wherein the replica count is a first replica count and wherein the method further comprises: determining, by the one or more processors, a second replica count of the first workload based on at least one of resource metrics, service metrics, or application metrics; determining, by the one or more processors, that the second replica count is greater than the first replica count; and determining, by the one or more processors, to implement the first replica count based on the second replica count being greater than first replica count.

Clause 19. The method of any of clauses 12-18, wherein the method further comprises: determining, by the one or more processors, that a second workload does not depend on the one or more other workloads; determining, by the one or more processors, a measure of carbon emission associated with the second workload; determining, by the one or more processors, a first replica count of the second workload based on at least one of resource metrics, service metrics, or application metrics; determining, by the one or more processors, a second replica count of the second workload based on the measure of the carbon emission associated with the second workload; determining, by the one or more processors, that the first replica count is greater than the second replica count; and determining, by the one or more processors, to implement the second replica count based on the first replica count being greater than second replica count; and scheduling, by the one or more processors, spawning of replicas of the second workload or destruction of replicas of the second workload to implement the second replica count.

Clause 20. Computer-readable media, comprising instructions which, when executed, cause one or more processors to: determine that a first workload depends on one or more other workloads; determine a measure of first carbon emission associated with the first workload; determine a predicted measure of second carbon emission associated with the one or more other workloads; determine a combined emission, the combined emission including the measure of the first carbon emission and the predicted measure of the second carbon emission; determine a replica count of the first workload based on the combined emission and an emission threshold; and schedule spawning of replicas of the first workload or destruction of replicas of the first workload to implement the replica count.

**Claims**

1. A computing system comprising:

   one or more memories;
   one or more processors communicatively coupled to the one or more memories, the one or more processors being configured to:

   determine that a first workload depends on one or more other workloads;
   determine a measure of first carbon emission associated with the first workload;
   determine a predicted measure of second carbon emission associated with the one or more other workloads;
   determine a combined emission, the combined emission including the measure of the first carbon emission and the predicted measure of the second carbon emission;
   determine a replica count of the first workload based on the combined emission and an emission threshold; and
   schedule spawning of replicas of the first workload or destruction of replicas of the first workload to implement the replica count.

2. The computing system of claim 1, wherein the first carbon emission is a direct carbon emission attributable to the first workload, the first carbon emission not including any emission attributable to the one or more other workloads.

3. The computing system of claim 2, wherein the second carbon emission is an indirect carbon emission attributable to supporting scale up of the one or more other workloads due to a scale up of the first workload.

4. The computing system of claim 3, wherein the one or more processors are further configured to determine a scale factor as a linear function of the direct carbon emission and the indirect carbon emission.

5. The computing system of any of claims 1-4, wherein to determine the measure of second carbon emission associated with the one or more other workloads, the one or more processors are configured to determine a corresponding relative scale factor for each of the one or more other workloads, the relative scale factor being indicative of a relative scaling of one of the one or more other workloads caused by a scaling of the first workload.

6. The computing system of claim 5, wherein the one or more processors are configured to determine the corresponding relative scale factor by executing a machine learning model, wherein the machine learning model is trained on historical workload metrics.

7. The computing system of any of claims 1-6, wherein the one or more processors are configured to determine that the first workload depends on the one or more other workloads by executing a machine learning model, wherein the machine learning model is trained on historical workload metrics.

8. The computing system of any of claims 1-7, wherein the one or more processors are further configured to output an indication that the first workload is certified against emission criteria.

9. The computing system of any of claims 1-8, wherein the replica count is a first replica count and wherein one or more processors are further configured to:

   determine a second replica count of the first workload based on at least one of resource metrics, service metrics, or application metrics;
   determine that the second replica count is greater than the first replica count; and
   determine to implement the first replica count based on the second replica count being greater than first replica count.

10. The computing system of any of claims 1-8, wherein the one or more processors are further configured to:

determine that a second workload does not depend on the one or more other workloads;

determine a measure of carbon emission associated with the second workload;

determine a first replica count of the second workload based on at least one of resource metrics, service metrics, or application metrics;

determine a second replica count of the second workload based on the measure of the carbon emission associated with the second workload;

determine that the first replica count is greater than the second replica count; and

determine to implement the second replica count based on the first replica count being greater than second replica count; and

schedule spawning of replicas of the second workload or destruction of replicas of the second workload to implement the second replica count.

11. The computing system of any of claims 1-10, wherein the emission threshold is specified by a service level agreement.

12. A method comprising:

determining, by one or more processors, that a first workload depends on one or more other workloads;

determining, by the one or more processors, a measure of first carbon emission associated with the first workload;

determining, by the one or more processors, a predicted measure of second carbon emission associated with the one or more other workloads;

determining, by the one or more processors, a combined emission, the combined emission including the measure of the first carbon emission and the predicted measure of the second carbon emission;

determining, by the one or more processors, a replica count of the first workload based on the combined emission and an emission threshold; and

scheduling, by the one or more processors, spawning of replicas of the first workload or destruction of replicas of the first workload to implement the replica count.

13. The method of claim 12, wherein the first carbon emission is a direct carbon emission attributable to the first workload, the first carbon emission not including any emission attributable to the one or more other workloads.

14. The method of claim 13, wherein the second carbon emission is an indirect carbon emission attributable to supporting scale up of the one or more other workloads due to a scale up of the first workload.

15. A computer-readable medium comprising instructions which, when executed by one or more programmable processors, cause one or more programmable processors to perform the method recited by any of claims 12-14.

FIG. 1

FIG. 2

COMPUTING DEVICE
200

NETWORK INTERFACE CARD
230

25

241

ESP AGENT
236

SERVICES
233

MEMORY
227

PROCESSING CIRCUITRY
231

KERNEL
237

232

ETHERNET BRIDGE
234

USER SPACE
245

VIRTUAL NIC(S)
229

VIRTUAL MACHINE(S)
228

VIRTUAL ROUTER
220

NFT
222A

NFT
222N

PHYSICAL DRIVER
225

KERNEL SPACE
243

HYPERVISOR
214

242

MEMORY
244

DISK
246

MICROPROCESSOR
210

FIG. 3

EP 4 521 199 A2

**FIG. 4**

FIG. 5

START

PICK WORKLOAD ⟋502

CHECK FOR AUTO SCALER CONFIG ⟋504

IS AS CONFIGURED? ⟋506
NO
YES

OBTAIN CURRENT RESOURCE/ APPLICATION METRIC VALUE ⟋508

CALCULATE REPLICA COUNT FOR CURRENT METRIC VALUE ⟋510

OBTAIN CURRENT EMISSION VALUE OF WORKLOAD ⟋512

CALCULATE REPLICA COUNT FOR CURRENT EMISSION VALUE ⟋514

OBTAIN WORKLOAD DEPENDECY TABLE ⟋516

DOES WL DEPEND ON OTHER WL(S)? ⟋518
NO
YES

CALCULATE RELATIVE SCALE FACTOR ⟋520

OBTAIN WORKLOAD EMISSION RATE FOR OTHER WORKLOAD(S) ⟋522

CALCULATE INDIRECT EMISSION ⟋524

CALCULATE REPLICA COUNT FOR COMBINED EMISSION VALUE ⟋526

RC1>RC3 ⟋528
YES
NO

RC1>RC2? ⟋530
YES
NO

RECOMMEND RC3 ⟋532

RECOMMEND RC1 ⟋534

RECOMMEND RC2 ⟋536

EP 4 521 199 A2

23

602

DETERMINE THAT A FIRST WORKLOAD DEPENDS ON ONE OR MORE OTHER WORKLOADS

604

DETERMINE A MEASURE OF FIRST CARBON EMISSION ASSOCIATED WITH THE FIRST WORKLOAD

606

DETERMINE A PREDICTED MEASURE OF SECOND CARBON EMISSION ASSOCIATED WITH ONE OR MORE OTHER WORKLOADS

608

DETERMINE A COMBINED EMISSION, THE COMBINED EMISSION INCLUDING THE MEASURE OF THE FIRST CARBON EMISSION AND THE PREDICTED MEASURE OF SECOND CARBON EMISSION

610

DETERMINE A REPLICA COUNT OF THE FIRST WORKLOAD BASED ON THE COMBINED EMISSION AND AN EMISSION THRESHOLD

612

SCHEDULE SPAWNING OF REPLICAS OF THE FIRST WORKLOAD OR DESTRUCTION OF REPLICAS OF THE FIRST WORKLOAD TO IMPLEMENT THE REPLICA COUNT

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 75938324
- IN 202341060929
- US 2013044378 W
- US 22650914